# EUROPÄISCHE PATENTSCHRIFT

(11) **EP 3 925 765 B1**
(45) Veröffentlichungstag und Bekanntmachung des Hinweises auf die Patenterteilung: **23.04.2025**
(21) Anmeldenummer: 21180111.3
(22) Anmeldetag: 17.06.2021
(51) Int. Cl.: B29C 65/18, B29C 65/78, B29K 101/12

(54) **VORRICHTUNG ZUM SCHWEISSEN VON THERMOPLASTISCHEN KUNSTSTOFFMATERIALIEN**
DEVICE FOR WELDING THERMOPLASTIC MATERIALS
DISPOSITIF DE SOUDAGE DE MATIÈRES THERMOPLASTIQUES

(30) Priorität: 18.06.2020 AT 505222020
(43) Veröffentlichungstag der Anmeldung: 22.12.2021
(73) Patentinhaber: ENGEL AUSTRIA GmbH, 4311 Schwertberg (AT)
(72) Erfinder: ZWICKLHUBER, Paul, 4550 Kremsmünster (AT); HARTUNG, Gregor, 4400 Steyr (AT)
(74) Vertreter: Torggler & Hofmann Patentanwälte - Innsbruck

(56) Entgegenhaltungen:
- EP-A1- 1 422 051
- JP-A- S 635 928
- US-A- 3 178 556

## Beschreibung

Die Erfindung betrifft eine Vorrichtung zum Schweißen von thermoplastischen Kunststoffmaterialien, insbesondere von Kunststofffolien oder Bändchen mit Faserverstärkung, mit den Merkmalen des Oberbegriffs des Anspruchs 1.

Zum Punktschweißen von Kunststoffmaterialien, insbesondere von thermoplastischen Kunststofffolien, werden oftmals Heizpatronen mit integriertem Temperaturfühler verwendet. Die Fühlerposition kann dabei variiert werden, sollte aber möglichst nahe an der Spitze des Schweißstempels liegen, welcher durch die Heizpatrone beheizbar ist. Der Schweißstempel ist üblicherweise zur Aufnahme der Heizpatrone ausgebildet. Somit besteht ein einfaches Element für eine Vorrichtung nach dem Stand der Technik aus einer Heizpatrone mit integriertem Temperaturfühler und einer Aufnahme, welche die Heizpatrone aufnimmt und die Wärme von der Heizpatrone über den Schweißstempel in das zu schweißende Substrat leitet. Natürlich kann auch ein externer Temperaturfühler angebracht werden, dann muss dieser mit der Aufnahme der Heizpatrone verbunden werden. Ein solches Element besitzt eine große Masse und ist somit thermisch träge und reagiert langsam auf Steuer- oder Regeleingriffe.

Ausführungsformen des Standes der Technik sind in der JP S635928 A, der EP 1422051 A1 oder der US 3178556 A offenbart.

Aufgabe der Erfindung ist die Bereitstellung einer Vorrichtung zum Schweißen von Kunststoffmaterialien, welche schneller auf Steuer- oder Regeleingriffe reagiert.

Diese Aufgabe wird durch ein Verfahren mit den Merkmalen des Anspruchs 1 gelöst. Vorteilhafte Ausführungsformen der Erfindung sind in den abhängigen Ansprüchen definiert.

Erfindungsgemäß ist vorgesehen, dass die zumindest eine Heizvorrichtung selbst als Schweißstempel ausgeführt ist, wodurch die Masse gegenüber dem Stand der Technik reduziert wird, d. h. es ist eine einstückige (mit anderen Worten: monolithische, aus einem Guss) Ausbildung von Schweißstempel und Heizvorrichtung vorgesehen, sodass direkt geschweißt werden kann, also ohne eine bisher übliche Kombination aus Schweißdorn und Heizpatrone.

Erfindungsgemäß ist eine Steuer- oder Regelvorrichtung vorgesehen, welche dazu ausgebildet ist, die zumindest eine Heizvorrichtung zur Durchführung eines pyrolytischen Reinigungsvorgangs des wenigstens einen Schweißstempels anzusteuern

Bevorzugt ist eine - vorzugsweise elektrische - Heizung des Schweißstempels vorgesehen, derart, dass wenigstens ein - vorzugsweise elektrisches - Heizelement (z. B. ein Widerstandsdraht) unmittelbar im Material des Schweißstempels eingebettet ist (also im Schweißstempel vollständig von Material des Schweißstempels kontaktiert ist, mit anderen Worten ohne einen über den vom wenigstens einen Heizelement eingenommenen Raum hinausgehenden Hohlraum).

Bevorzugt ist vorgesehen, dass:
- der wenigstens eine Schweißstempel eine Masse in einem Bereich von etwa 3 Gramm bis etwa 30 Gramm, vorzugsweise in einem Bereich von etwa 5 Gramm bis etwa 15 Gramm aufweist und
- die zumindest eine Heizvorrichtung (erfindungsgemäß durch den Schweißstempel gebildet) mit einer Leistung in einem Bereich von etwa 30 Watt bis etwa 600 Watt, vorzugweise in einem Bereich von etwa 100 Watt bis etwa 350 Watt betreibbar ist.

Durch die geringe Masse des Schweißstempels kann die Vorrichtung sehr schnell auf Steuer- oder Regeleingriffe reagieren. Je geringer die Masse des Schweißstempels ist, desto geringer ist die erforderliche Heizleistung der Heizvorrichtung und umgekehrt.

Der Schweißstempel ist so ausgeführt, dass eine Schweißfläche zum Punktschweißen vorhanden ist. Als Schweißfläche wird bevorzugt eine vorzugsweise ebene Fläche mit einer Größe von bis zu 100 mm² eingesetzt. Besonders bevorzugt ist die Fläche kleiner als 25 mm².

Es kann vorgesehen sein, dass der Schweißstempel annähernd zylindrisch ausgeführt ist (im Wesentlichen abgesehen von der Spitze, welche sich zur Ausbildung der Schweißfläche verjüngt) und axial betrachtet wenigstens zwei Zonen aufweist, von denen jene Zone, die die Schweißfläche aufweist, natürlich beheizt. Zum Beispiel können hintereinander (in Richtung der Spitze hin betrachtet) eine unbeheizte Zone, eine beheizte Zone und eine unbeheizte Zone vorgesehen sein. Ein Temperaturfühler kann z. B. in der unteren unbeheizten Zone angeordnet sein.

Um thermoplastische Kunststofffolien zu verschweißen, muss im einfachsten Fall nur der Schweißstempel zu den Kunststofffolien geführt werden. Um zwei Kunststofffolien zu verschweißen, muss der Schweißstempel dabei auf eine Temperatur über dem Glasübergang (bei amorphen Kunststoffen) oder auf eine Temperatur über dem Schmelzpunkt (bei teilkristallinen Kunststoffen) erwärmt werden.

Beim Schweißprozess selbst wird der wenigstens eine Schweißstempel für das Anpressen durch die Anpressvorrichtung gegen das zu verschweißende Substrat gepresst. Ob die Bewegung vom Substrat (eigentlich von einem Träger, auf welchem das Substrat angeordnet ist) oder vom Schweißstempel kommt, d. h. welche Komponente von der Anpressvorrichtung bewegt wird, ist dafür nicht von Belang. Bevorzugt ist aber vorgesehen, dass sich wenigstens der Schweißstempel auf einer Bewegungsmechanik befindet, sodass die Schweißbewegung vom Schweißstempel kommt und nicht die Kunststoffmaterialien zum Schweißstempel geführt werden müssen.

In einer bevorzugten Ausführungsform ist eine Handlingvorrichtung vorgesehen und der wenigstens eine Schweißstempel ist an einem Arm der Handlingvorrichtung (z. B. Roboter samt Übernahmekopf) angeordnet. Diese Ausführungsform eignet sich besonders zum Verschweißen von Tapes.

Die Anpressdauer ist temperaturabhängig und je höher die Temperatur gewählt wird, desto geringer kann die Anpressdauer sein. Der Anpressdruck ist viskositätsabhängig und hängt somit in bekannter Weise vom eingesetzten Kunststoff sowie von der Schweißtemperatur ab.

Unter Kunststofffolien sind Halbzeuge aus thermoplastischem Kunststoff zu verstehen, welche eine Länge und eine Breite haben und deren Dicken mindestens um den Faktor 5 kleiner sind als deren Länge bzw. deren Breite. Diese Halbzeuge können mit Füllstoffen wie z. B. Talkum, Kreise, Glasfasern, Kohlefasern, Naturfasern, Flammschutzmittel, UV-Stabilisatoren und ähnlichen versehen sein.

Vorzugsweise ist vorgesehen, dass der wenigstens eine Schweißstempel aus einem keramischen Material (kristalline Keramik oder amorphe Keramik, d. h. Glas) besteht. Dabei ist z. B. wenigstens ein Widerstandsdraht in das keramische Material eingebettet und vorzugsweise ist auch ein Temperaturfühler in das keramische Material integriert. In einer bevorzugten Variante ist der Temperaturfühler in unmittelbare Nachbarschaft der Schweißfläche angeordnet. In einer sehr bevorzugten Variante ist der Temperaturfühler in unmittelbarer Nachbarschaft der Schweißfläche des Schweißstempels, in einem nicht unmittelbar beheizten Bereich angeordnet.

Die Verwendung eines keramischen Schweißstempels bringt mehrere Vorteile mit sich:
- die Stirnfläche des Keramikstücks kann gut zur Herstellung einer planen Schweißfläche bearbeitet werden
- es kann besonders einfach eine Pyrolyse durchgeführt werden

Die Vorrichtung kann eine Niederhaltevorrichtung zum Niederhalten der zu schweißenden Kunststoffmaterialien aufweisen. So können die zu schweißenden Kunststoffmaterialien, insbesondere Kunststofffolien, vor und/oder während und/oder nach dem Schweißen gegeneinander gepresst werden. Ein Niederhalten der Kunststoffmaterialien nach dem Schweißvorgang verhindert zudem, dass Kunststoffmaterial am Schweißstempel anhaften kann und verringert somit das Risiko einer schlechten Schweißung.

Erfindungsgemäß weist die Vorrichtung eine Steuer- oder Regelvorrichtung auf, vorzugsweise zum Steuern oder Regeln:
- der zumindest einen Heizvorrichtung und/oder
- der Anpressvorrichtung und/oder
- der Niederhaltevorrichtung

Mittels der Steuer- oder Regelvorrichtung ist es möglich, dass der wenigstens eine Schweißstempel auf einer geeigneten Schweißtemperatur betrieben wird und dass dieser Schweißstempel mit einen Anpressdruck für eine definierbare Zeit gegen das Kunststoffmaterial gedrückt wird. Nach Ablauf der Schweißzeit kann der Schweißstempel wieder abgehoben werden und die Kunststoffmaterialien sind verschweißt.

Bevorzugt ist ein Temperaturfühler vorgesehen (besonders bevorzugt an der zumindest einen Heizvorrichtung und/oder am wenigstens einen Schweißstempel angeordnet), dessen Signale der Steuer- oder Regelvorrichtung der Vorrichtung zuführbar sind. Ist der Temperaturfühler am Schweißstempel angeordnet, befindet er sich bevorzugt in unmittelbarer Nachbarschaft der Schweißfläche.

Die Steuer- oder Regelvorrichtung kann dazu ausgebildet sein, unter Verwendung der Signale des Temperaturfühlers eine Überwachung eines Schweißprozesses durchzuführen.

Als Qualitätsparameter für einen Schweißvorgang kann ein durch den Temperaturfühler erfasster Temperaturverlauf verwendet werden. Grundsätzlich wird beim Punktschweißen von thermoplastischen Kunststoffen am Schweißstempel eine Temperatur gewählt und auf diese Temperatur wird der Schweißstempel durch Energiezufuhr an die Heizvorrichtung geregelt (vorzugsweise wird für die Regelung eine PID-Regelung verwendet). Da beim Schweißprozess Energie an die Kunststoffe abgegeben wird, verändert sich die Temperatur am Schweißstempel. Dies wird von der Steuer- oder Regelvorrichtung erkannt und die Regelung versucht, die Solltemperatur wieder zu erreichen. Somit kann der Temperaturverlust bei einem Schweißvorgang als Qualitätsparameter betrachtet werden.

Wird immer wieder das gleiche Kunststoffmaterial verschweißt, sollte der Temperaturverlust bei jedem Schweißpunkt sehr ähnlich sein. Somit kann eine Betrachtung für den Qualitätsparameter sein, wie hoch der Temperaturverlust pro Schweißpunkt ist. Vorzugsweise wird dafür als Starttemperatur die Temperatur genommen, bevor der Schweißstempel Kontakt zum zu verschweißenden Kunststoffmaterial hat. Während des Schweißvorganges und bevorzugt auch noch eine gewisse Zeit danach wird der Temperaturverlauf betrachtet und der Minimalwert wird ermittelt. Die Zeitspanne, welche für die Ermittlung des Minimalwerts genommen wird, kann geringfügig länger sein als die eigentliche Schweißzeit.

Je näher sich der Temperaturfühler an der Schweißfläche befindet, desto sensibler wird auch die Temperaturwahrnehmung sein. Befindet sich der Temperaturfühler direkt an der Schweißfläche, so gibt es keine Verzögerung im Temperatursignal und es kann für die Betrachtung des Minimalwertes nur der eigentliche Schweißvorgang betrachtet werden.

Baulich lässt sich der Temperaturfühler aber nicht immer direkt an die Schweißfläche integrieren und deshalb sitzt der Temperaturfühler evtl. nur in unmittelbarer Nachbarschaft. Deshalb kann für die Betrachtung des Minimalwertes auch die Zeit betrachtet werden, nachdem der Schweißvorgang schon stattgefunden hat und der Schweißstempel nicht mehr im Kontakt mit dem zu schweißenden Substrat steht.

Als minimale Zeitspanne kann somit die Kontaktzeit des Schweißstempels mit dem zu schweißenden Substrat betrachtet werden. In einer bevorzugten Variante wird zusätzlich noch eine kontaktlose Zeit nach Abheben des Schweißstempels mitbetrachtet. Vorzugsweise werden noch 15 Sekunden kontaktlose Zeit mitbetrachtet, besonders bevorzugt sind es weniger als 6 Sekunden.

Anschließend wird von der Starttemperatur der Minimalwert abgezogen und dieser Wert kann als Qualitätsparameter herangezogen werden. Verändert sich dieser Wert, so hat sich auch die Schweißqualität verändert.

Neben der Temperatur kann auch die Energie betrachtet werden, welche bei einem Schweißvorgang benötigt wird. Auch hier richtet sich der Betrachtungszeitraum nach der Position des Temperaturfühlers und kann somit länger sein als die Zeit, welche für den eigentlichen Schweißvorgang benötigt wird.

Eine Qualitätsbetrachtung macht vor allem bei wiederkehrenden Schweißvorgängen Sinn. Als ein solches Verfahren kann der Tape-Lege-Prozess genannt werden. Beim Tape-Legen wird aus Tapes ein maßgeschneidertes Halbzeug aufgebaut.

Bei modernen Tape-Lege-Verfahren werden Tapes im Sekundentakt abgelegt und müssen anschließend verschweißt werden. Beim Punktschweißen von thermoplastischen Folien verschmutzt der Schweißstempel bei jeder Schweißung etwas. Die Verschmutzung baut sich in weiterer Folge kontinuierlich auf. Ist ein gewisser Verschmutzungsgrad erreicht, wird die Schweißqualität zunehmend schlecht und es kann dazu kommen, dass Schweißpunkte nicht mehr stoffschlüssig verbunden werden können.

Mit der Einführung einer Qualitätskennzahl kann dieses Problem besser erkennbar gemacht werden. Vorzugsweise erkennt die Steuer- oder Regelvorrichtung anhand einer sich verändernden Qualitätskennzahl das die Schweißqualität schlechter wird und gibt zumindest ein Signal aus. Dieses Signal könnte bedeuten, dass der Schweißstempel manuell gereinigt werden müssen. Vorzugsweise wird bei einer Abweichung der Schweißprozess unterbrochen und der Schweißstempel kann gereinigt werden. Besonders bevorzugt wird bei einer Abweichung der Schweißstempel automatisch thermisch gereinigt. Anschließend kann die Schweißung wiederholt werden und somit kann sichergestellt werden, dass der Schweißpunkt hält.

Besonders bevorzugt soll sich der Schweißstempel thermisch reinigen. Sollte die Kennzahl abweichen, wird die Schweißstempeltemperatur temporär erhöht, damit sich die Schweißstempeloberfläche thermisch (Pyrolyse) reinigen kann. Ein thermischer Reinigungszyklus soll dabei in einer Zeit von unter 5 Minuten realisierbar sein. Besonders bevorzugt, benötigt die thermische Reinigung allerdings weniger als 2 Minuten. Als ein Reinigungszyklus wird die Zeitspanne verstanden, die benötigt wird, um den Schweißstempel auf eine Temperatur aufzuheizen, bei welcher sich die Verschmutzung zersetzen kann und anschließend wieder abkühlt auf die eigentliche Arbeitstemperatur.

Besonders bevorzugt ist daher die Steuer- oder Regelvorrichtung dazu ausgebildet, automatisch oder nach empfangenem Kommando durch einen Bediener die zumindest eine Heizvorrichtung zur Durchführung eines pyrolytischen Reinigungsvorgangs des wenigstens einen Schweißstempels anzusteuern.

Wird beim Schweißstempel eine thermische Reinigung durchgeführt, muss der Schweißstempel auf eine Temperatur hochgeheizt werden, welche geeignet ist, den Kunststoff thermisch zu zersetzen. Da diese Temperatur meist weit über dem eigentlichen Arbeitspunkt liegt, muss der Schweißstempel nach dem Aufheizen und eventuellen Halten auf die Arbeitstemperatur abgekühlt werden. Damit der Schweißstempel abkühlt, wird nach abgeschlossener thermischer Reinigung keine Energie zum Schweißstempel gesendet. Zusätzlich ist es vorstellbar, dass das Abkühlen durch eine Kühlvorrichtung zum Kühlen des wenigstens einen Schweißstempels unterstützt wird, indem z. B. zur Beschleunigung des Konvektionsprozesses Druckluft auf den Schweißstempel geblasen wird.

Ausführungsbeispiele der Erfindung werden anhand der Figuren diskutiert. Es zeigen:
- Fig. 1: eine schematische Darstellung einer erfindungsgemäßen Vorrichtung
- Fig. 2a-c: eine erfindungsgemäße Vorrichtung in verschiedenen Stadien eines Schweißvorganges
- Fig. 3: eine Darstellung zeitabhängiger Größen während eines Schweißvorganges

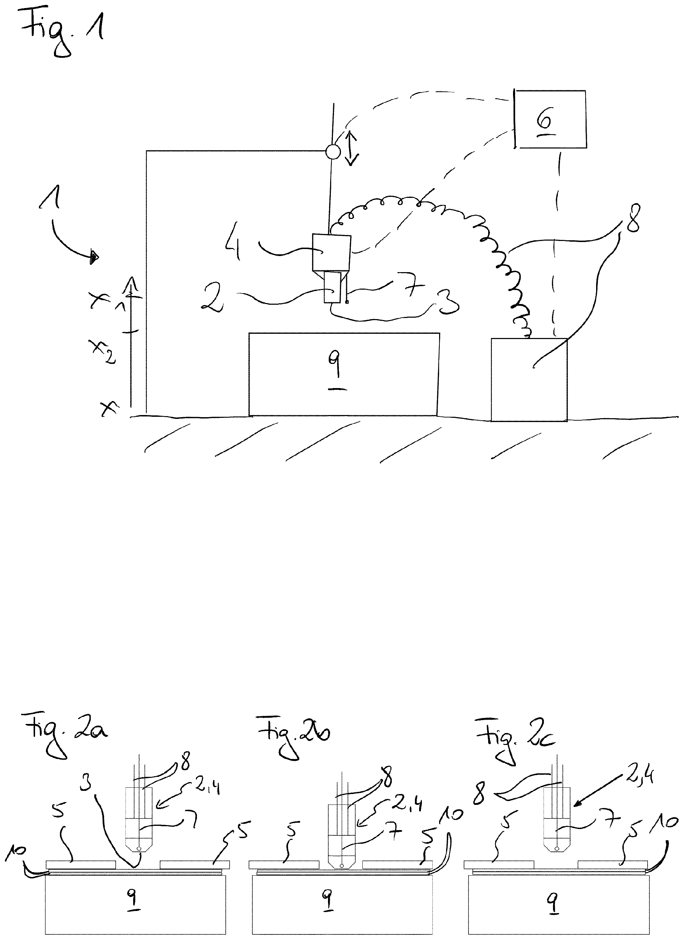

Fig. 1 zeigt eine Vorrichtung 1 zum Schweißen von thermoplastischen Kunststoffmaterialien (in Fig. 2 z. B. von zwei oder mehreren Kunststofffolien 10) mit einem Schweißstempel 2, welcher eine Schweißfläche 3 zum Punktschweißen aufweist, und einer Schnittstelle 4 (übertrieben groß gezeichnet, ist vorzugsweise allenfalls als Steckverbindung für Energieversorgungsleitungen ausgebildet oder entfällt ganz) zum Heizen der Schweißfläche 3. Über eine nur schematisch dargestellte, weil dem Stand der Technik entsprechende, Anpressvorrichtung kann der Schweißstempel 2 (in x-Richtung) bewegt werden und so zum Schweißen an auf einem Träger 9 angeordnete Kunststoffmaterialien angepresst werden.

Die Schnittstelle 4 ist durch eine Energieversorgung 8 mit Energie versorgbar. Über eine Steuer- oder Regelvorrichtung 6 kann der Schweißvorgang gesteuert oder geregelt werden. Zu diesem Zweck sind in bekannter Weise (strichliert gezeichnet) Signalverbindungen vorgesehen. Über einen Temperaturfühler 7 kann die Temperatur des Schweißstempels 2 (genauer: der Schweißfläche 3) gemessen und an die Steuer- oder Regelvorrichtung 6 gemeldet werden.

In den Fig. 2a-c ist schematisch ein Schweißvorgang dargestellt. Der Schweißstempel 2 ist annähernd zylindrisch ausgeführt (im Wesentlichen abgesehen von der Spitze, welche sich zur Ausbildung der Schweißfläche 3 verjüngt) und weist hier axial betrachtet drei Zonen auf, nämlich hintereinander (in Richtung der Spitze hin betrachtet) eine unbeheizte Zone, eine beheizte Zone und eine unbeheizte Zone. Der Temperaturfühler 7 ist hier in der unteren unbeheizten Zone angeordnet.

Zwei Kunststofffolien 10, welche auf dem Träger 9 angeordnet sind (Fig. 2a) und von einer Niederhaltevorrichtung 5 (nur schematisch dargestellt, weil dem Stand der Technik entsprechend, sie kann in bekannter Weise von der Steuer- oder Regelvorrichtung 6 gesteuert oder geregelt werden) niedergehalten werden, werden mit Hilfe der Vorrichtung 1 an einem oder mehreren Punkten miteinander verschweißt. Die Schweißstellung, in welcher sich die Schweißfläche 3 in Position x₂ befindet, ist in Fig. 2b dargestellt. In Fig. 2c ist der Schweißvorgang abgeschlossen und die Schweißfläche befindet sich in Position x₁.

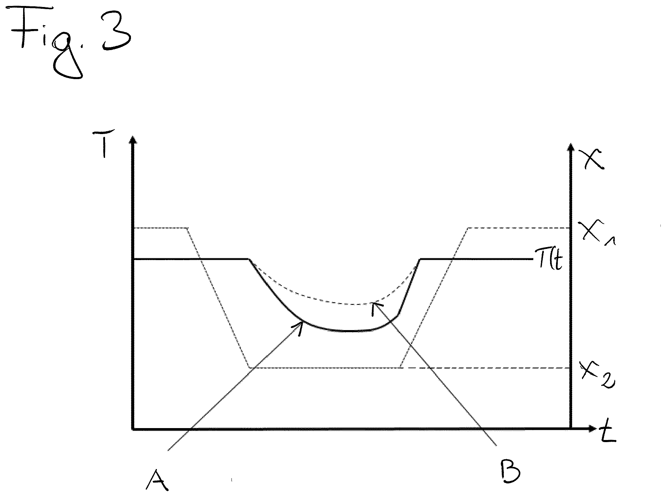

Über den Temperaturverlauf T(t) kann - vgl. Fig. 3 - auf die Qualität des Schweißvorganges rückgeschlossen werden. Der Kurvenverlauf A zeigt einen Schweißvorgang guter Qualität, der Kurvenverlauf B einen mit schlechter Qualität.

### Bezugszeichenliste:

- 1: Vorrichtung
- 2: Schweißstempel
- 3: Schweißfläche
- 4: Schnittstelle
- 5: Niederhaltevorrichtung
- 6: Steuer- oder Regelvorrichtung
- 7: Temperaturfühler
- 8: Energieversorgung
- 9: Träger
- 10: Kunststofffolie

- T(t): Temperaturverlauf der Schweißfläche in Abhängigkeit von der Zeit t
- x₁: Position der Schweißfläche, in welcher kein Schweißvorgang erfolgt
- x₂: Position der Schweißfläche, in welcher ein Schweißvorgang erfolgen kann

## Patentansprüche

1. Vorrichtung (1) zum Schweißen von thermoplastischen Kunststoffmaterialien, insbesondere von Kunststofffolien (10) oder Bändchen mit Faserverstärkung, mit wenigstens einem Schweißstempel (2), welcher eine Schweißfläche (3) zum Punktschweißen aufweist, zumindest einer Heizvorrichtung zum Heizen der Schweißfläche (3) des wenigstens einen Schweißstempels (2) und vorzugsweise einer Anpressvorrichtung zum Anpressen des wenigstens einen Schweißstempels (2) an die zu schweißenden Kunststoffmaterialien, wobei die zumindest eine Heizvorrichtung selbst als Schweißstempel (2) ausgeführt ist, **dadurch gekennzeichnet, dass** eine Steuer- oder Regelvorrichtung (6) vorgesehen ist, welche dazu ausgebildet ist, die zumindest eine Heizvorrichtung zur Durchführung eines pyrolytischen Reinigungsvorgangs des wenigstens einen Schweißstempels (2) anzusteuern.

2. Vorrichtung nach Anspruch 1, wobei der wenigstens eine Schweißstempel (2) aus einem keramischen Material besteht.

3. Vorrichtung nach Anspruch 1 oder 2, wobei:
- der wenigstens eine Schweißstempel (2) eine Masse in einem Bereich von etwa 3 Gramm bis etwa 30 Gramm, vorzugsweise in einem Bereich von etwa 5 Gramm bis etwa 15 Gramm aufweist und
- die zumindest eine Heizvorrichtung zum Heizen des wenigstens einen Schweißstempels (2) mit einer Leistung in einem Bereich von etwa 30 Watt bis etwa 600 Watt, vorzugweise in einem Bereich von etwa 100 Watt bis etwa 350 Watt betreibbar ist.

4. Vorrichtung nach wenigstens einem der vorangehenden Ansprüche, wobei der wenigstens eine Schweißstempel (2) für ein Anpressen durch die Anpressvorrichtung bewegbar ist.

5. Vorrichtung nach wenigstens einem der vorangehenden Ansprüche, wobei die Vorrichtung (1) eine Niederhaltevorrichtung (5) zum Niederhalten der zu schweißenden Kunststoffmaterialien aufweist.

6. Vorrichtung nach wenigstens einem der vorangehenden Ansprüche, wobei die Steuer- oder Regelvorrichtung (6) zum Steuern oder Regeln
- der zumindest einen Heizvorrichtung und/oder
- der Anpressvorrichtung und/oder
- der Niederhaltevorrichtung (5)
vorgesehen ist.

7. Vorrichtung nach wenigstens einem der vorangehenden Ansprüche, wobei ein Temperaturfühler (7) vorgesehen ist, dessen Signale der Steuer- oder Regelvorrichtung (6) zuführbar sind.

8. Vorrichtung nach dem vorangehenden Anspruch, wobei der Temperaturfühler (7) am wenigstens einen Schweißstempel (2) angeordnet ist.

9. Vorrichtung nach einem der beiden vorangehenden Ansprüche, wobei die Steuer- oder Regelvorrichtung (6) dazu ausgebildet ist, unter Verwendung der Signale des Temperaturfühlers (7) eine Überwachung eines Schweißprozesses durchzuführen.

10. Vorrichtung nach wenigstens einem der vorangehenden Ansprüche, wobei eine Kühlvorrichtung zum Kühlen des wenigstens einen Schweißstempels (2) vorgesehen ist.

11. Vorrichtung nach wenigstens einem der vorangehenden Ansprüche, wobei eine Handlingvorrichtung vorgesehen ist und die zumindest eine Heizvorrichtung und/oder der wenigstens eine Schweißstempel (2) an einem Arm der Handlingvorrichtung angeordnet sind bzw. ist.

## Claims

1. A device (1) for welding thermoplastic materials, in particular plastic films (10) or tapes with fiber reinforcement, comprising at least one welding stamp (2) having a welding surface (3) for spot welding, at least one heating device for heating the welding surface (3) of the at least one welding stamp (2) and preferably a pressing device for pressing the at least one welding stamp (2) onto the plastic materials to be welded, wherein the at least one heating device itself is designed as a welding stamp (2), **characterized in that** an open-loop or closed-loop control device (6) is provided, which is designed to actuate the at least one heating device in order to carry out a pyrolytic cleaning process of the at least one welding stamp (2).

2. A device according to claim 1, wherein the at least one welding stamp (2) consists of a ceramic material.

3. A device according to claim 1 or 2, wherein:
- the at least one welding stamp (2) has a mass in a range from about 3 grams to about 30 grams, preferably in a range from about 5 grams to about 15 grams, and
- the at least one heating device for heating the at least one welding stamp (2) can be operated with a power in a range from about 30 watts to about 600 watts, preferably in a range from about 100 watts to about 350 watts.

4. A device according to at least one of the preceding claims, wherein the at least one welding stamp (2) is moveable for pressing by the pressing device.

5. A device according to at least one of the preceding claims, wherein the device (1) comprises a holding-down device (5) for holding down the plastic material to be welded.

6. A device according to at least one of the preceding claims, wherein the open-loop or closed-loop control device (6) is provided for open-loop or closed-loop controlling
- the at least one heating device and/or
- the pressing device and/or
- the holding-down device (5).

7. A device according to at least one of the preceding claims, wherein a temperature sensor (7) is provided, the signals of which can be supplied to the open-loop or closed loop control device (6).

8. A device according to the preceding claim, wherein the temperature sensor (7) is arranged on the at least one welding stamp (2).

9. A device according to one of the two preceding claims, wherein the open-loop or closed-loop control device (6) is designed to monitor a welding process using the signals of the temperature sensor (7).

10. A device according to at least one of the preceding claims, wherein a cooling device for cooling the at least on welding stamp (2) is provided.

11. A device according to one of the preceding claims, wherein a handling device is provided and the at least one heating device and/or the at least one welding stamp (2) are or is arranged on one arm of the handling device.

## Revendications

1. Dispositif (1) pour souder des matériaux plastiques thermoplastiques, en particulier des films plastiques (10) ou des rubans renforcés par des fibres, avec au moins un poinçon de soudage (2), lequel présente une surface de soudage (3) pour le soudage par points, au moins un dispositif de chauffage pour chauffer la surface de soudage (3) de l'au moins un poinçon de soudage (2) et de préférence un dispositif de pression pour presser l'au moins un poinçon de soudage (2) sur les matériaux plastiques à souder, dans lequel l'au moins un dispositif de chauffage est lui-même réalisé en tant que poinçon de soudage (2), **caractérisé en ce qu'**un dispositif de commande ou de régulation (6) est prévu, lequel est conçu pour commander l'au moins un dispositif de chauffage pour la réalisation d'un processus de nettoyage pyrolytique de l'au moins un poinçon de soudage (2).

2. Dispositif selon la revendication 1, dans lequel l'au moins un poinçon de soudage (2) est constitué d'un matériau céramique.

3. Dispositif selon la revendication 1 ou 2, dans lequel :
- l'au moins un poinçon de soudage (2) présente une masse dans une plage d'environ 3 grammes à environ 30 grammes, de préférence dans une plage d'environ 5 grammes à environ 15 grammes et
- l'au moins un dispositif de chauffage pour chauffer l'au moins un poinçon de soudage (2) peut fonctionner avec une puissance dans une plage d'environ 30 watts à environ 600 watts, de préférence dans une plage d'environ 100 watts à environ 350 watts.

4. Dispositif selon au moins l'une des revendications précédentes, dans lequel l'au moins un poinçon de soudage (2) est mobile pour une pression par le dispositif de pression.

5. Dispositif selon au moins l'une des revendications précédentes, dans lequel le dispositif (1) présente un dispositif de maintien (5) pour maintenir les matériaux plastiques à souder.

6. Dispositif selon au moins l'une des revendications précédentes, dans lequel le dispositif de commande ou de régulation (6) est prévu pour commander ou réguler
- l'au moins un dispositif de chauffage et/ou
- le dispositif de pression et/ou
- le dispositif de maintien (5).

7. Dispositif selon au moins l'une des revendications précédentes, dans lequel un capteur de température (7), dont les signaux peuvent être amenés au dispositif de commande ou de régulation (6), est prévu.

8. Dispositif selon la revendication précédente, dans lequel le capteur de température (7) est agencé sur au moins un poinçon de soudage (2).

9. Dispositif selon l'une des deux revendications précédentes, dans lequel le dispositif de commande ou de régulation (6) est conçu pour réaliser une surveillance d'un processus de soudage à l'aide des signaux du capteur de température (7).

10. Dispositif selon au moins l'une des revendications précédentes, dans lequel un dispositif de refroidissement pour refroidir l'au moins un poinçon de soudage (2) est prévu.

11. Dispositif selon au moins l'une des revendications précédentes, dans lequel un dispositif de manipulation est prévu et l'au moins un dispositif de chauffage et/ou l'au moins un poinçon de soudage (2) est ou sont agencés sur un bras du dispositif de manipulation.
